# EUROPEAN PATENT SPECIFICATION

(11) **EP 1 897 207 B1**
(45) Date of publication and mention of the grant of the patent: **07.08.2013**
(21) Application number: 06753316.6
(22) Date of filing: 16.06.2006
(51) Int. Cl.: H02K 5/24

(54) **NOISE DAMPED LINEAR ACTUATOR**
GERÄUSCHGEDÄMPFTER LINEARER AKTUATOR
ACTIONNEUR LINÉAIRE À BRUIT AMORTI

(30) Priority: 16.06.2005 DK 200500883
(43) Date of publication of application: 12.03.2008
(73) Proprietor: Concens A/S, 6715 Esbjerg N (DK)
(72) Inventor: JØRGENSEN, Jørgen, Peder, DK-6710 Esbjerg V (DK)
(74) Representative: Tellefsen, Jens J.
(86) International application number: PCT/DK2006/000350
(87) International publication number: WO 2006/133716

(56) References cited:
- WO-A-2004/100632
- DE-U1- 20 105 651
- US-A- 4 352 035
- US-A- 4 428 710
- US-A- 4 655 099
- US-A- 5 884 893
- PATENT ABSTRACTS OF JAPAN vol. 009, no. 212 (E-339), 29 August 1985 (1985-08-29) -& JP 60 074943 A (MATSUSHITA DENKI SANGYO KK), 27 April 1985 (1985-04-27)

## Description

### FIELD OF THE INVENTION

The present invention relates to a noise damped linear actuator a method for according to the preamble of claim 1. Such an actuator is known from US4428710. The invention also relates to manufacturing such a linear actuator.

### BACKGROUND OF THE INVENTION

Linear actuators are used for a variety of applications, for example for moving parts of beds in hospitals, for moving parts in wheel chairs, for adjusting furniture and vehicle seats, for opening and closing of windows, and many others.

In certain cases, there is a strong desire to reduce the noise of the driving actuator to a minimum. In some instances, this may be achieved by making the material of the actuator heavier, which reduces the risk for annoying resonances. However, this results in a bulkier actuator, which in many cases is unwanted.

Another approach is disclosed in International patent application WO 2004/100632, where the driving unit is incorporated in a foamed material. This has been found as a solution because the individual sources of noise, being partly due to vibrations, partly due to transmission, and partly due to noise in the suspension of the adjustable elements, are difficult, if not impossible, to locate. However, the enclosing of the driving unit in a foam shell leads to a larger actuator, which in many cases is unwanted.

Especially for slim actuators with actuator spindles, preferred for their slim design, low weight, negligible level of vibrations and the versatility of applications in narrow spaces, noise has been recognised as being indeed a problem. Especially the high frequencies of the noise are experienced as unpleasant, even though the sound intensity may not be at a level which is generally disliked. The latter is due to the fact that slim actuators used in the above mentioned fields typically employ a high speed motors, for example in connection with gears having a high gearing ratio between the motor and the rotating spindle, because a high force is desired despite a small motor with rather low force.

### DESCRIPTION / SUMMARY OF THE INVENTION

It is therefore the object of the invention to provide a linear actuator with a damping of the noise, especially at high frequencies.

This object is achieved with a linear actuator of the tubular type comprising an inner tube that is partially contained in an outer tube and arranged for displacement relative to each other along the longitudinal axes of the tubes, where one of the tubes is connected to a spindle and the other tube is connected to a threaded bushing such that the mutual displacement is achieved by a rotational interaction between the spindle and the threaded bushing, wherein the actuator comprises a motor or a combination of a motor and a gear as a driving unit, which is surrounded by and connected to one of the tubes for driving the rotational interaction, wherein one of the tubes has a first flange, and wherein the driving unit has a second flange for connection with the first flange. According to the invention, a resilient polymer part is provided between the first and the second flanges for achieving a resilient suspension of the driving unit in one of the tubes for damping primarily the high frequency part of the noise during driving of the actuator

It has been surprising that a resilient polymer part between the driving unit and one of the tubes does not only reduce the noise in general, but especially reduces the noise in the high frequency part of the noise spectrum. The result is that users experience the noise from the actuator as much less unpleasant than the noise of similar actuators without the resilient part. Especially in connection with use in the healthcare sector, such as for beds in hospitals or in connection with wheel chairs, and also in connection with furnitures used in private homes, the change of the noise profile is greatly appreciated.

Though the use of a silicone rubber plate between a driving unit and a flange in a linear actuator is disclosed in US patent application No. 2004 / 0 255 705 by Sullivan in order to damp vibrations, the use of a resilient polymer part, for example a rubber plate, to damp noise in actuators of the above mentioned type was in no way obvious, because these types of actuators are known to a have very low degree of vibrations and the use of a resilient polymer part, for example a rubber plate, was not expected to have any substantial influence. Therefore instead, the first attempts included an encapsulation of the tubes in a material that made the material heavier in order to reduce the high frequency vibrations. However, this resulted in very bulky arrangements that were not appreciated by the customers and were regarded as a step back, as the slim construction of the double tube type of actuator is attractive in regions with only small space. Neither the encapsulation in foamed material according to WO 2004/100632 has been proved advantageous when it comes to space saving.

Remarkable however, as experiments have shown, was a 6 dB reduction of noise in such actuators, which was easily achieved when a rubber plate was used and introduced to such a type of linear actuator.

As the above arguments indicate, the invention is especially useful for actuators with high speed driving units, for example, wherein the driving unit is of the type with a rotation frequency of at least 10 Hz. However, the beneficial effect increases at higher frequencies, such as 45 Hz or higher, for example 100 Hz or higher.

A linear actuator according to the invention may have the spindle driven by the motor directly or through a gear that is connected to the driving unit. Alternatively, the bushing may be driven. A gear, for example a planetary gear, may be used for reducing the rotation frequency between the driving unit axle and the spindle or between the driving unit and the threaded bushing.

In a practical embodiment, the first flange extends transversely across the inner volume of this tube. For example, the driving unit is contained inside the outer tube, and the outer tube is fastened to a sleeve with the first flange, the first flange extending transversely across the inner volume of the outer tube and being fastened to second flange of the driving unit with a resilient polymer part between the driving unit and the flange. Thus, the driving unit is held in place as a floating arrangement only suspended through the resilient polymer part.

For example, the rotational axis of the motor may be parallel with the rotational axis of the spindle. The driving unit may comprise a motor and a gear in an end-to-end configuration, the axis of the motor being parallel with the axis of the gear, and the second flange being provided at one end of this configuration. The first flange may have a plate with a central bore through which a connection from the driving unit to the spindle extends. In addition, the first flange may have glued or vulcanised thereon a resilient polymer plate, which is connected to the driving unit. Thus, the resilient polymer plate is placed flat between the second flange and the first flange.

Advantageously, the resilient polymer part is made of a polymer that is resistant to oil and resistant to temperatures of up to at least 100°C and rather up to 140°C. This is necessary, as this type of actuator may experience a substantial temperature elevation during use. A material that exhibits these properties is natural rubber.

For linear actuators of the tubular type comprising an inner tube that is partially contained in an outer tube and arranged for displacement relative to each other along the longitudinal axes of the tubes, where one of the tubes is connected to a spindle and the other tube is connected to a threaded bushing such that the mutual displacement is achieved by a rotational interaction between the spindle and the threaded bushing, wherein a driving unit, the driving unit being a motor or a combination of a motor and a gear, wherein the driving unit is surrounded by and connected to one of the tubes for driving the rotational interaction, wherein one of the tubes comprises a first flange, and the driving unit has a second flange for connection to the first flange, the high frequency part of the noise may be damped by providing a resilient polymer part and connecting first flange to the second flange with the resilient polymer part in between.

The noise damping may further include providing the first flange transversely across the inner volume of the one of the tubes and providing the resilient polymer part as a plate with a first side and a second, opposite side, the first side having dimensions roughly corresponding to the dimensions of the first flange, orienting the plate with its first side facing the first flange and the second side facing the second flange.

By suspending the driving unit only on the flange, a kind of floating suspension is obtained.

### SHORT DESCRIPTION OF THE DRAWINGS

The invention will be explained in more detail with reference to the drawing, where
FIG. 1 is a technical drawing of an actuator according to the invention,
FIG. 2 is a detailed sketch of the flange and the driving unit suspension.

### DETAILED DESCRIPTION / PREFERRED EMBODIMENT

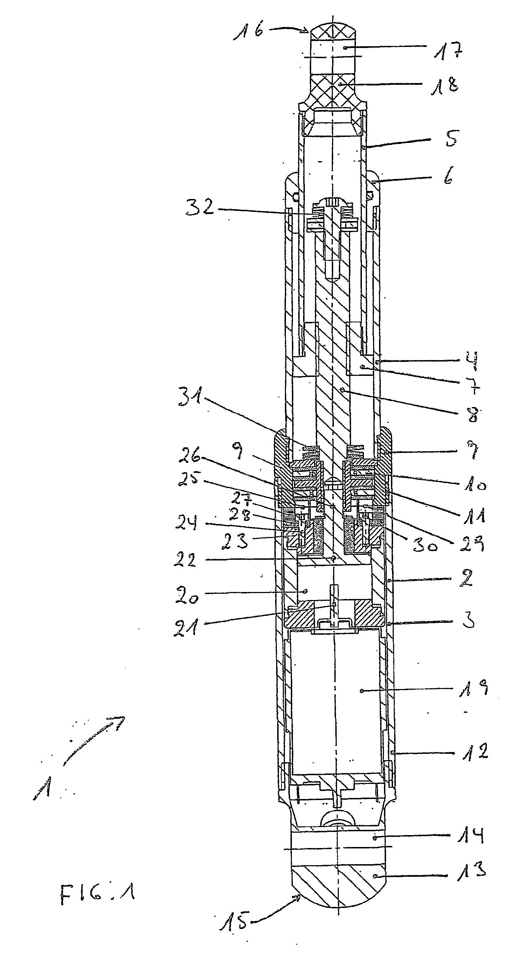

FIG. 1 is a technical drawing of a linear actuator 1 according to the invention. It comprises a cylindrical outer tube 2 with circular cross section. The outer tube has a first outer tube part 3 and a second outer tube part 4. The actuator 1 also comprises an inner tube 5 that is contained partially in the outer tube 2 for displacement relatively to the outer tube 2 in a direction along the longitudinal axis of the inner tube 5. The inner cylindrical tube 5 is supported on its outer periphery inside a front sleeve 6 and on a bushing 7 in sliding contact with the inner surface of the second outer tube part 4.

The bushing 7 is internally threaded corresponding to the outer threading of a spindle 8 for rotational interaction between the spindle 8 and the bushing 7 such that a rotation of the spindle 8 leads to a displacement of the bushing 7 with respect to the spindle 8. The spindle is rotationally supported in sleeve 9 through roller bearings 10. A rotation of the spindle, thus, results in a displacement of the inner tube 5 relatively to the outer tube 2, to which the sleeve 9 is screw-fastened through threading 11.

One end 12 of the first outer tube part 3 is connected to an end flange 13 with a bore 14 through the end flange for fastening of one 15 end of the actuator to a device. Correspondingly, the opposite end 16 of the actuator is provided with another bore 17 in a second end flange 18 connected to the inner tube 5. A displacement of the inner tube 5 relatively to the outer tube 2 leads to a contraction or elongation of the actuator 1.

In order to drive the spindle 8, a motor 19 is provided inside the first outer tube part 3. The motor is connected to a gear 20 for in combination to form a driving unit, into which the axle 21 of the motor extends. The gear 20, such as a planetary gear, in turn is connected to the spindle via a connection 22. The gear 20 reduces the speed from the high speed motor in order to provide higher force for driving the spindle. This way, a rather small motor 19 can be used to reduce the dimensions of the actuator 1 while still providing a high force of the actuator 1.

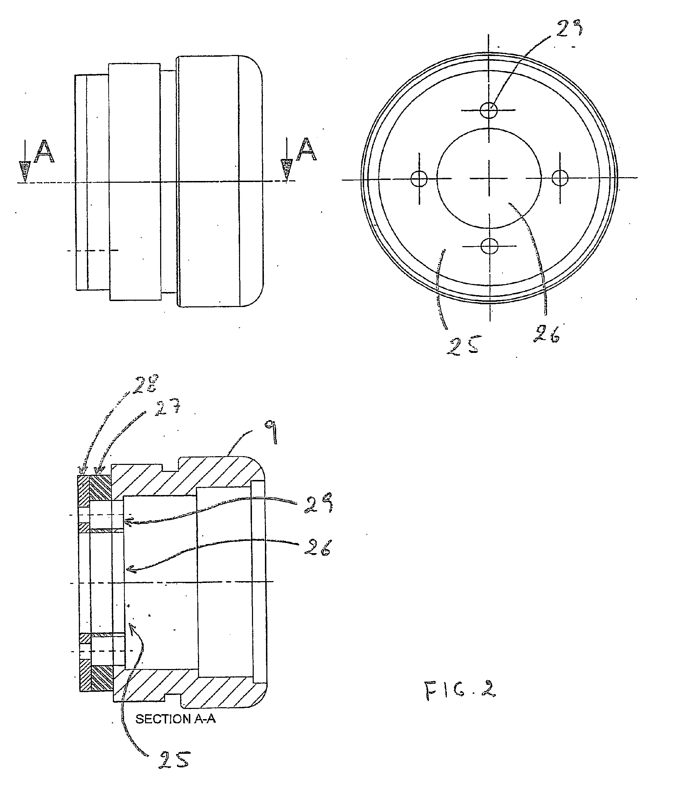

The gear 20 has a front flange 23 into which screws 24 are fastened. Sleeve 9 has a flange 25, shown in greater detail in FIG. 2 with the sleeve 9 on the left side and the flange 25 on the right side. The flange 25 has a central bore 26 through which the connection 22 extends. The flange 25 has glued or vulcanised on it a rubber plate 27 on which there is glued or vulcanised a steel plate 28. Thus, the sleeve 9 with the flange 25 and the rubber plate 27 and the steel plate 28 form one unit. Screws 24 can be placed through holes 29 in the flange, where the holes 29 in the flange 25 and corresponding holes in the rubber plate 27 allow the head 30 of the screws 24 to go through. However, the holes in the steel plate 28 allow only the threaded part of the screws 24 to go through but not the head 30 of the screws 24. A screwing of the screws 24 into the front flange 23 of the gear 20 results in a tight connection between the steel plate 28 and the front flange 23 such that the sleeve 9 is effectively connected to the gear 20. This way, the unit with the gear 20 and the motor 19 are only suspended by the sleeve 9. The rubber plate 27 between this unit 19, 20 and the sleeve 9 results in an efficient noise damping, especially at the high frequencies.

Further shown in FIG. 1 is an arrangement of steel plates 31 as a resilient end stop for the bushing 7 at the minimum elongation of the actuator 1. On the other hand, a likewise arrangement of steel plates 32 is used as a second end stop for maximum elongation for the actuator 1. The resilient end stops are used for preventing the actuator 1 to get stuck at the end stops.

## Claims

1. A linear actuator (1) of the tubular type comprising an inner tube (5) that is partially contained in an outer tube (2) and arranged for displacement relative to each other along the longitudinal axes of the tubes (2, 5), where one of the tubes (2) is connected to a spindle (8) and the other tube (5) is connected to a threaded bushing (7) such that the mutual displacement is achieved by a rotational interaction between the spindle (8) and the threaded bushing (7), wherein the actuator (1) comprises a driving unit, the driving unit being a motor (19) or a combination of a motor (19) and a gear (20), wherein the driving unit is surrounded by and connected to one of the tubes (2) for driving the rotational interaction, wherein one of the tubes (2) has a first flange (25), and wherein the driving unit has a second flange (23) for connection with the first flange (25), ***characterised in that*** a resilient polymer part (27) is provided between the first (25) and the second flange (23) for achieving a resilient suspension of the driving unit in one of the tubes (2) for damping primarily the high frequency part of the noise during driving of the actuator (1).

2. A linear actuator according to claim 1, wherein the driving unit is of the type with a rotation frequency of at least 45 Hz.

3. A linear actuator according to any preceding claim, wherein the first flange (25) extends transversely across the inner volume of this one of the tubes (2).

4. A linear actuator according to any preceding claim, the rotational axis of the motor (19) is parallel with the rotational axis of the spindle (8).

5. A linear actuator according to any preceding claim, wherein the driving unit comprises a motor (19) and a gear (20) in an end-to-end configuration, the axis of the motor (19) being parallel with the axis of the gear (20), wherein the second flange (23) is provided at an end of this configuration.

6. A linear actuator according any preceding claim, wherein the first flange (25) has a plate with a central bore (14) through which a connection (22) from the driving unit to the spindle (8) extends, wherein the first flange (25) has glued or vulcanised thereon a resilient polymer plate (27) and is connected to the driving unit with the resilient polymer plate (27) between the second flange (23) and the first flange (25).

7. A linear actuator according to any preceding claim, wherein the resilient polymer part (27) is made of a polymer that is resistant to oil and resistant to temperatures of up to at least 140°C.

8. A linear actuator according to any preceding claim, wherein the resilient polymer part (27) is made of natural rubber.

9. A method for manufacturing a linear actuator of the tubular type according to claim 1 comprising an inner tube (5) that is partially contained in an outer tube (2) and arranged for displacement relative to each other along the longitudinal axes of the tubes (2, 5), where one of the tubes (2) is connected to a spindle (8) and the other tube (5) is connected to a threaded bushing (7) such that the mutual displacement is achieved by a rotational interaction between the spindle (8) and the threaded bushing (7), wherein the actuator (1) comprises a motor (19) or a combination of a motor (19) and a gear (20) as a driving unit, which is surrounded by and connected to one of the tubes (2) for driving the rotational interaction, wherein this one of the tubes (2) comprises a first flange (25), and the driving unit has a second flange (23) for connection to the first flange (25), wherein the method comprises providing a resilient polymer part (27) and connecting the first flange (25) with the second flange (23) with the resilient polymer part (27) in between for achieving a resilient suspension of the driving unit in one of the tubes (2).

10. The method according to claim 9, further comprising providing the first flange (25) transversely across the inner volume of the one of the tubes (2) and providing the resilient polymer part (27) as a plate with a first side and a second, opposite side, the first side having dimensions roughly corresponding to the dimensions of the first flange (25), and orienting the plate with its first side facing the first flange (25) and then second side facing the second flange (23).

## Patentansprüche

1. Linearer Aktuator (1) vom Rohrtyp und umfassend ein teilweise in einem äusseren Rohr (2) enthaltenes inneres Rohr (5), die zur gegenseitig relativen Verschiebung entlang den Längsachsen der Röhre (2, 5) angeordnet sind, wobei ein Rohr (2) mit einer Spindel (8) und das andere Rohr (5) mit einer Gewindehülse (7) verbunden ist, so dass die gegenseitige Verschiebung durch rotierende Interaktion zwischen der Spindel (8) und der Gewindehülse (7) erzielt wird, wobei der Aktuator (1) eine Treibeinheit aufweist, die ein Motor (19) oder eine Kombination von einem Motor (19) und einem Getriebe (20) ist, wobei die Treibeinheit von einem Rohr (2) umgeben sowie zum Treiben der rotierenden Interaktion auch mit dem Rohr verbunden ist, wobei ein Rohr (2) einen ersten Flansch (25) aufweist, und wobei die Treibeinheit zur Verbindung mit dem ersten Flansch (25) einen zweiten Flansch (23) aufweist, **dadurch gekennzeichnet, dass** zur Erzielung einer elastischen Aufhängung der Treibeinheit in einem Rohr (2) zum Dämpfen vor allem des hochfrequenten Geräuschteils während des Treibens des Aktuators (1) ein elastischer Polymerteil (27) zwischen dem ersten (25) und dem zweiten Flansch (23) angeordnet ist.

2. Linearer Aktuator nach Anspruch 1, wobei die Treibeinheit von dem eine Rotationsfrequenz von wenigstens 45 Hz aufweisenden Typ ist.

3. Linearer Aktuator nach irgendeinem der vorhergehenden Ansprüche, wobei der erste Flansch (25) sich quer über das Innenvolumen dieses Rohres (2) erstreckt.

4. Linearer Aktuator nach irgendeinem der vorhergehenden Ansprüche, wobei die Rotationsachse des Motors (19) parallel mit der Rotationsachse der Spindel (8) ausgelegt ist.

5. Linearer Aktuator nach irgendeinem der vorhergehenden Ansprüche, wobei die Treibeinheit einen Motor (19) und ein Getriebe (20) in einer durchgehenden Konfiguration umfasst, wobei die Achse des Motors (19) parallel mit der Achse des Getriebes (20) ausgelegt ist, wobei der zweite Flansch (23) an einem Ende dieser Konfiguration angeordnet ist.

6. Linearer Aktuator nach irgendeinem der vorhergehenden Ansprüche, wobei der erste Flansch (25) eine Scheibe mit einer zentralen Bohrung (14) aufweist, durch die eine Verbindung (22) von der Treibeinheit zu der Spindel (8) verläuft, wobei eine elastische Polymerscheibe (27) mit dem ersten Flansch (25) verklebt oder zusammenvulkanisiert und mit der Treibeinheit mit der elastischen Polymerscheibe (27) zwischen dem zweiten Flansch (23) und dem ersten Flansch (25) verbunden ist.

7. Linearer Aktuator nach irgendeinem der vorhergehenden Ansprüche, wobei der elastische Polymerteil (27) aus einem gegen Öl und Temperaturen bis auf wenigstens 140°C beständigen Polymer hergestellt ist.

8. Linearer Aktuator nach irgendeinem der vorhergehenden Ansprüche, wobei der elastische Polymerteil (27) aus Naturkautschuk hergestellt ist.

9. Verfahren zum Herstellen eines linearen Aktuators (1) vom Rohrtyp nach Anspruch 1 und umfassend ein teilweise in einem äusseren Rohr (2) enthaltenes inneres Rohr (5), die zur gegenseitig relativen Verschiebung entlang den Längsachsen der Röhre (2, 5) angeordnet sind, wobei ein Rohr (2) mit einer Spindel (8) und das andere Rohr (5) mit einer Gewindehülse (7) verbunden ist, so dass die gegenseitige Verschiebung durch rotierende Interaktion zwischen der Spindel (8) und der Gewindehülse (7) erzielt wird, wobei der Aktuator (1) einen Motor (19) oder eine Kombination von einem Motor (19) und einer Getriebe (20) als eine Treibeinheit aufweist, die von einem Rohr (2) umgeben sowie zum Treiben der rotierenden Interaktion auch mit dem Rohr verbunden ist, wobei dieses Rohr (2) einen ersten Flansch (25) aufweist, und die Treibeinheit zur Verbindung mit dem ersten Flansch (25) einen zweiten Flansch (23) aufweist, wobei das Verfahren das Bereitstellen eines elastischen Polymerteils (27) umfasst sowie das Verbinden des ersten Flansches (25) mit dem zweiten Flansch (23) mit dem elastischen Polymerteil (27) dazwischen zur Erzielung einer elastischen Aufhängung der Treibeinheit in einem Rohr (2).

10. Verfahren nach Anspruch 9, das ferner das Bereitstellen eines ersten Flansches (25) quer über das Innenraum eines Rohres (2) sowie das Bereitstellen eines elastischen Polymerteils (27) als eine Scheibe mit einer ersten Seite und einer zweite gegenüberliegenden Seite umfasst, wobei die erste Seite Dimensionen aufweist, die ungefähr den Dimensionen des ersten Flansches (25) entsprechen, und Ausrichtung der Scheibe mit ihrer ersten Seite dem ersten Flansch (25) zugewandt und der zweiten Seite dem zweiten Flansch (23) zugewandt.

## Revendications

1. Actionneur linéaire (1) de type tubulaire comprenant un tube interne (5) qui est partiellement contenu dans un tube externe (2) et disposés pour se déplacer l'un par rapport à l'autre en suivant les axes longitudinaux des tubes (2, 5), l'un des tubes (2) étant connecté à une broche (8) et l'autre tube (5) étant connecté à une douille filetée (7) de façon à ce que le déplacement mutuel s'obtient par une interaction de rotation entre la broche (8) et la douille filetée (7), l'actionneur (1) comportant une unité d'entraînement, l'unité d'entraînement étant un moteur (19) ou une combinaison d'un moteur (19) et un pignon (20), l'unité d'entraînement étant entourée par et connectée à l'un des tubes (2) pour entraîner l'interaction de rotation, dans lequel l'un des tubes (2) possédant un premier flasque (25), et dans lequel l'unité d'entraînement comprend un deuxième flasque (23) pour connexion avec le premier flasque (25), **caractérisé en ce qu'**une pièce en polymère élastique (27) est installée entre le premier flasque (25) et le deuxième flasque (23) pour constituer une suspension élastique de l'unité d'entraînement dans l'un des tubes (2) principalement pour amortir la partie haute fréquence du bruit pendant l'entraînement de l'actionneur (1).

2. Actionneur linéaire selon la revendication 1, l'unité d'entraînement est du type ayant une fréquence de rotation d'au minimum 45 Hz.

3. Actionneur linéaire selon l'une quelconque des revendications précédentes, dans lequel le premier flasque (25) s'étend transversalement sur le volume intérieur de l'un des tubes (2).

4. Actionneur linéaire selon l'une quelconques des revendications précédentes, l'axe de rotation du moteur (19) est en parallèle avec l'axe de rotation de la broche (8).

5. Actionneur linéaire selon l'une quelconque des revendications précédentes, dans lequel l'unité d'entraînement comprend un moteur (19) et un pignon (20) dans une configuration de bout en bout, l'axe du moteur (19) étant en parallèle avec l'axe du pignon (20), dans lequel le deuxième flasque (23) est réalisé à une extrémité de cette configuration.

6. Actionneur linéaire selon l'une quelconque des revendications précédentes, dans lequel le premier flasque (25) comprend une plaque avec un perçage central (14) par lequel une connexion (22) s'étend à partir de l'unité d'entraînement jusque'à la broche (8), dans lequel le premier flasque (25) comprend une plaque en polymère élastique (27) collée ou vulcanisée sur celui-ci et étant connectée à l'unité d'entraînement avec la plaque en polymère élastique (27) entre le deuxième flasque (23) et le premier flasque (25).

7. Actionneur linéaire selon l'une quelconque des revendications précédentes, dans lequel la pièce en polymère élastique (27) est réalisée en polymère résistant à l'huile et résistant aux températures allant jusqu'à 140°C.

8. Actionneur linéaire selon l'une quelconque des revendications précédentes, dans lequel la pièce en polymère élastique (27) est fabriquée en caoutchouc naturel.

9. Méthode de fabrication d'un actionneur linéaire du type tubulaire selon la revendication 1, comprenant un tube interne (5) qui est patiellement contenu dans un tube externe (2) et disposés pour se déplacer l'un par rapport à l'autre en suivant les axes longitudinaux des tubes (2, 5), l'un des tubes (2) est connecté à une broche (8) et l'autre tube (5) est connecté à une douille filetée (7) de façon à ce que le déplacement mutuel s'obtient par une interaction de rotation entre la broche (8) et la douille filetée (7), l'actionneur (1) comportant un moteur (19) ou une combinaison d'un moteur (19) et un pignon (20) comme une unité d'entraînement entourée par et connectée à l'un des tubes (2) pour entraîner l'interaction de rotation, dans lequel l'un des tubes (2) comprend un premier flasque (25), et l'unité d'entraînement comprend un deuxième flasque (23) pour connexion avec le premier flasque (25), dans lequel le méthode comprend la fourniture d'une pièce en polymère élastique (27) et la connexion du premier flasque (25) avec le deuxième flasque (23) avec la pièce en polymère élastique au milieu pour réaliser une suspension élastique de l'unité d'entraînement dans l'un des tubes (2).

10. Méthode selon la revendication 9, comprenant en outre la fourniture du premier flasque (25) transversalement sur le volume intérieur de l'un des tubes (2) et la fourniture de la pièce en polymère élastique (27) comme une plaque ayant un premier côté et un deuxième côté opposé, le premier côté ayant des dimensions correspondant à peu près aux dimensions du premier flasque (25), et orienter la plaque de façon à ce que le premier côté tourne vers le premier flasque (25) et le deuxième côté tourne vers le deuxième flasque (23).
